**Europäisches Patentamt**

**European Patent Office**

**Office européen des brevets**

(19)

(11) Publication number : **0 518 551 A1**

(12)

# EUROPEAN PATENT APPLICATION

(21) Application number : **92305097.5**

(22) Date of filing : **03.06.92**

(51) Int. Cl.⁵ : **G02B 1/02, G02B 1/10**

(30) Priority : **04.06.91 JP 132572/91**

(43) Date of publication of application :
**16.12.92 Bulletin 92/51**

(84) Designated Contracting States :
**DE FR GB**

(71) Applicant : **MATSUSHITA ELECTRIC
INDUSTRIAL CO., LTD.
1006, Oaza Kadoma
Kadoma-shi, Osaka-fu, 571 (JP)**

(72) Inventor : **Uchida, Shinji
1011-1-922- Oaza Uzumasa
Neyagawa-shi, Osaka-fu 572 (JP)**
Inventor : **Korenaga, Tsuguhiro
Shaworyo, 16-1, Miyamae-cho
Kadoma-shi, Osaka-fu 571 (JP)**

(74) Representative : **Flegg, Christopher Frederick
et al
Boult, Wade & Tennant 27 Furnival Street
London EC4A 1PQ (GB)**

(54) Infrared optical element.

(57)    An infrared element includes an intermediate thin film (12) formed between a substrate (11) of silver halide and an outermost thin film (13) of $Sb_2S_3$ to avoid a reaction between the substrate and the $Sb_2S_3$ film and also to minimize oxidization of the $Sb_2S_3$ film under a specific environment thereby to stabilize the $Sb_2S_3$ film.

## Fig. 1

EP 0 518 551 A1

The present invention relates to an optical element for use with infrared rays of light such as used in optical devices.

An optical element currently employed in optical devices is prepared from material such as, for example, zinc selenide (ZnSe), gallium arsenide (GaAs), germanium (Ge) or silicon (Si) by the use of an optical polishing technique. The optical element prepared by the use of the optical polishing technique is extremely expensive because the optical polishing process is applied in a number of stages to a crystal formed by the use of a chemical vapor deposition (CVD) technique.

In view of the foregoing, an expensive method has recently come to be promising wherein an infrared optical element made of metal halide is prepared by molding under pressure at a temperature lower than the softening point thereof. An example of this prior art is disclosed in, for example, the Japanese Laid-open Patent Publication No. 59-212801.

As an easily moldable metal halide which exhibits a transparency in an infrared region of wavelength includes a silver halides such as, for example, AgBr and AgCl, but has a problem in that it is so sensitive to rays of light of a wavelength shorter than about 0.4 $\mu$m, accompanied by a consequent reduction in its optical characteristic in visible and infrared regions of wavelength. More specifically, the conventional metal halide, when allowed to stand under the sun for a few minutes, has its light transmittance lowering down to some percents.

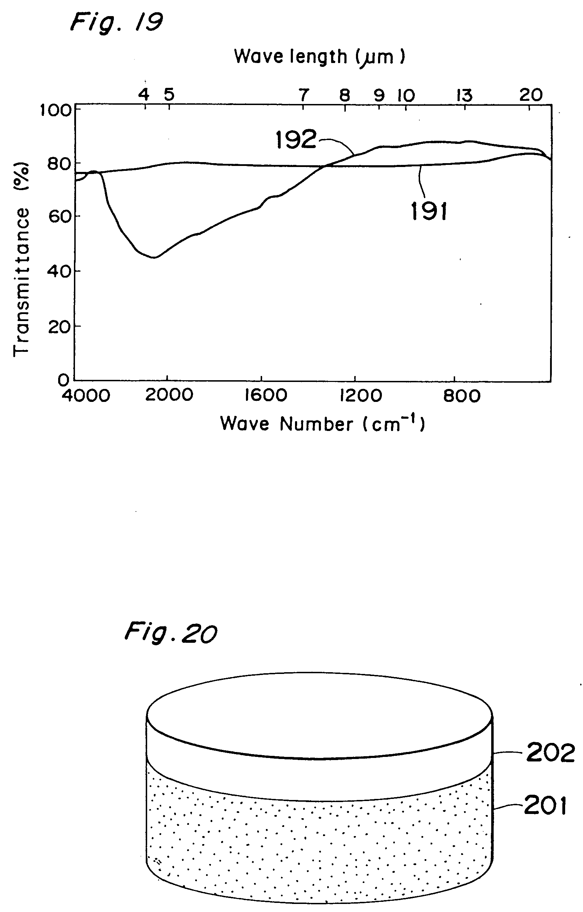

As discussed in a literature, "Sekigaisen Kogaku (Infrared Engineering) (page 124)", published from Kindai Kagaku Shuppann-sha in 1963, an attempt has been made to coat a relatively low toxic $Sb_2S_3$ film on a silver halide substrate so as to represent such a structure as shown in Fig. 20 so that any possible deterioration in characteristic of the substrate which would result in when exposed to light can be lessened by shielding rays of light of a wavelength shorter than about 0.4 $\mu$m.

Although the attempt is successful in that any possible reduction in characteristic of the substrate resulting from the exposure thereof to light can be minimized, we have found through a series of experiments that the prior art structure wherein the $Sb_3S_3$ film is coated on the silver halide substrate tends to exhibit a problematic reduction in light transmittance. More specifically, we have found that, when the prior art structure was allowed to stand in a high temperature atmosphere, a reaction took place between the silver halide and the $Sb_2S_3$ film, resulting in a reduction in light transmittance and that, when the $Sb_2S_3$ film was allowed stand in a specific atmosphere full of $SO_2$ gas, the surface was oxidized resulting in a reduction in light transmittance.

Thus, although the silver halide substrate coated with the $Sb_2S_3$ film can exhibit an improved light transmittance to a certain extent, the improved light transmittance can be sustained for a substantial length of time, thereby posing a problem that has long been desired to be eliminated.

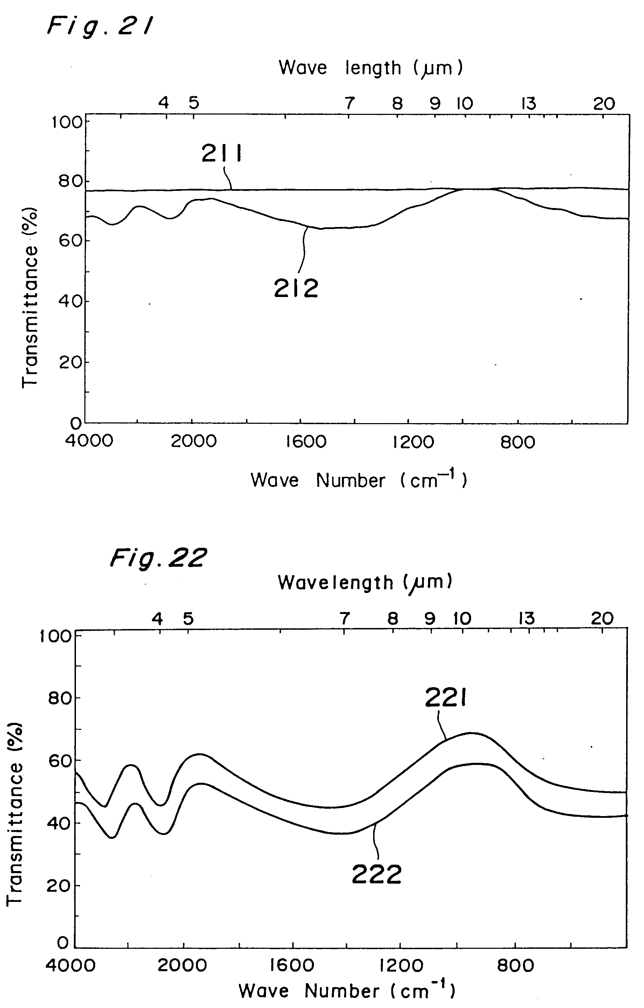

Also, as shown in Fig. 21, the coating of the $Sb_2S_3$ film on the silver halide substrate tends to result in a reduction in light transmittance to a value lower than that exhibited solely by the substrate. In Fig. 21, reference numeral 211 represents the light transmittance exhibited solely by the substrate and reference numeral 212 represents that exhibited by the substrate coated with the $Sb_2S_3$ film. This problem originates from an interference between the substrate and the $Sb_2S_3$ film and cannot in theory be eliminated.

In general, the material is often used as a window-pane and an optical element such as a lens and is found having a grave problem in that a loss of reflectance occurs not only at one surface of the optical element, but also at the opposite surface thereof, accompanied by a reduction in light transmittance.

Accordingly, the present invention has been devised to eliminate the above discussed problems and is intended to provide an improved infrared optical element excellent in reliability and capable of retaining a practically sufficient optical characteristic for a prolonged period of time.

To this end, the present invention provides an infrared optical element comprising a substrate made of silver halide, at least one thin film of of $Sb_2S_3$ overlaying the substrate and a intermediate thin-film interposed between the substrate and the $Sb_2S_3$ film.

The present invention also provides an optical element comprising a substrate made of silver halide, one or more thin films of $Sb_2S_3$ overlaying the substrate, and an outermost thin film of one of $TiO_2$ and $CeF_3$ positioned on one side of the $Sb_2S_3$ film or films remote from the substrate.

According to the present invention, the intermediate thin film formed between the silver halide substrate and the $Sb_2S_3$ film is effective to avoid any possible reaction taking place between the substrate and the $Sb_2S_3$ film. Also, the provision of the outermost film of $TiO_2$ or $CeF_3$ having an excellent environmental resistance is effective to avoid any possible oxidization of $Sb_2S_3$, permitting the infrared transmittance to be sustained for a prolonged period of time.

This and other objects and features of the present invention will become readily understood from the following description of a preferred embodiment taken with reference to the accompanying drawings, in which:

Fig. 1 is a schematic perspective view showing a structure of an infrared optical element according to a first preferred embodiment of the present invention;

Fig. 2 is a schematic diagram showing an apparatus for forming a film in the practice of the present inven-

2

tion;

Fig. 3 is a graph showing results of reliability tests conducted on the optical element according to the present invention;

Fig. 4 is a graph showing results of reliability tests conducted on the optical element according to the present invention and the prior art optical element;

Fig. 5 is a graph showing optical characteristics of the optical element according to the present invention;

Fig. 6 is an analytical graph showing the optical element according to the present invention;

Fig. 7 is a schematic diagram showing the optical element according to a second preferred embodiment of the present invention;

Fig. 8 is a graph showing a reliability of the optical element according to the present invention;

Fig. 9 is a schematic perspective view of the optical element according to a third preferred embodiment of the present invention;

Fig. 10 is a graph showing an infrared transmittance exhibited by the optical element according to the present invention;

Fig. 11 is a structural diagram showing the optical element of the present invention;

Fig. 12 is a graph showing an infrared transmittance exhibited by the optical element according to the present invention;

Fig. 13 is a structural diagram showing the optical element according to the present invention;

Fig. 14 is a graph showing an infrared transmittance exhibited by the optical element according to the present invention;

Fig. 15 is a graph showing characteristic curves exhibited by the prior art optical elements at ultraviolet and visible regions of wavelength;

Fig. 16 is a graph showing a relationship between the light transmittance and the film thickness;

Fig. 17 is a structural diagram showing the optical element according to the present invention;

Fig. 18 is is a graph showing characteristic curves exhibited by the optical elements of the present invention at ultraviolet and visible regions of wavelength;

Fig. 19 is a graph showing the infrared transmittance exhibited by the optical element according to the present invention;

Fig. 20 is a structural diagram showing the prior art optical element;

Fig. 21 is a graph showing the infrared transmittance exhibited by the prior art optical element;

Fig. 22 is a graph showing the infrared transmittance exhibited by the prior art optical element before and after high-temperature and high-humidity resistance tests; and

Fig. 23 is a graph showing the infrared transmittance exhibited by the prior art optical element before and after $SO_2$ gas tests.

Before the description of the preferred embodiments of the present invention proceeds, results of test conducted to the prior art structure shown in Fig. 20 to determine the reliability thereof will first be discussed.

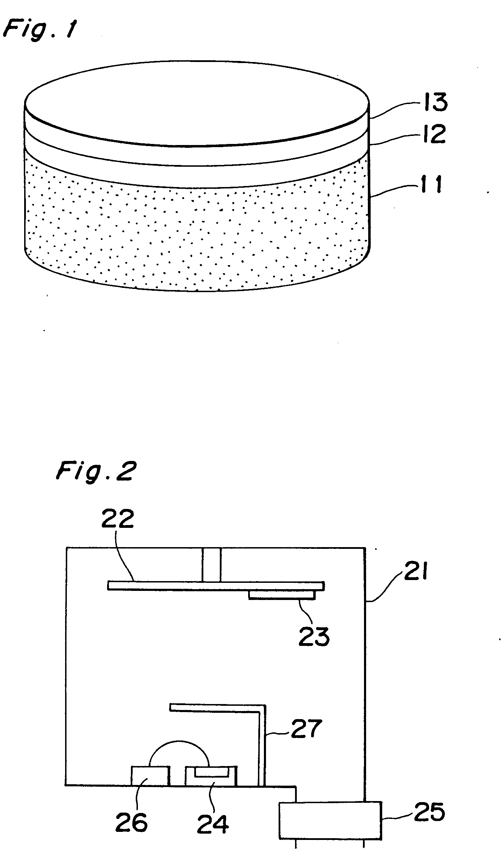

In preparing the prior art optical element of the structure shown in Fig. 20, a vacuum vapor deposition apparatus shown in Fig. 2 was employed. At this time, Using AgBr as a material 23 for the silver halide substrate, the material 23 was placed on a substrate holder 22, and $Sb_2S_3$ as a material to be vapor deposited was placed in a crusible 24.

Then, an exhaust pump 25 was driven to evacuate a vacuum vessel 21, followed by a heating of the $Sb_2S_3$ material within the crusible 24 by means of an electron gun 26 to evaporate the $Sb_2S_3$ material so as to deposit the latter on the substrate 23 in the form of a $Sb_2S_3$ film.

Fig. 22 illustrates a change in light transmittance exhibited by the optical element having the $Sb_2S_3$ film of about 1.7 microns formed on opposite surfaces of the AgBr substrate in the manner described above, when the optical element was tested for 1,000 hours at an elevated temperature of 60°C and a high relative humidity of 90%. It is to be noted that during the film forming the substrate was at normal temperatures.

In Fig. 22, the axis of ordinates and the axis of abscissas represent the light transmittance and the wavelength, respectively. Curves 221 and 222 represent respective light transmittances exhibited before and after the test, respectively.

As indicated therein, it is clear that, when allowed to stand under an atmosphere of high temperature and high relative humidity the prior art optical element exhibited an about 10% reduction in light transmittance. This reduction in light transmittance is detrimental in that it leads not only to a reduction in transmission efficiency of light energies, but also a deterioration in quality of light, such as a variation in intensity of light, having passed through the substrate and the thin film.

It is to be noted that, although in the foregoing example the substrate has been described as made of AgBr, similar tests conducted to the optical element having the silver halide substrate made of any one of AgCl, AgI or a solid solution thereof have shown respective results similar to that exhibited by the optical element having the silver halide substrate made of AgBr.

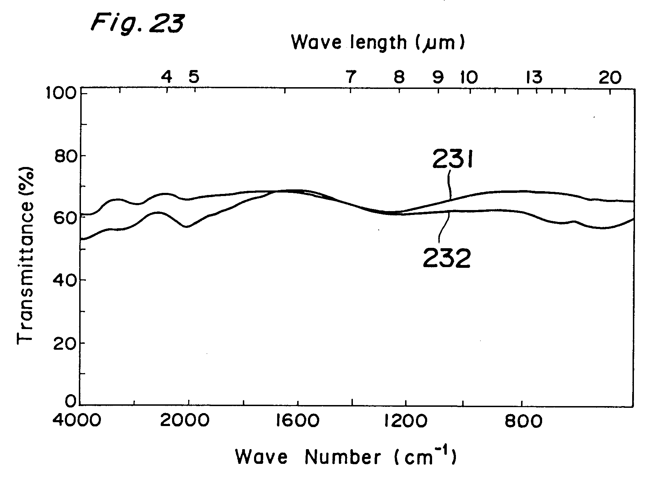

Fig. 23 illustrates a change in light transmittance exhibited by the optical element having the $Sb_2S_3$ film formed on opposite surfaces of the AgBr substrate in the manner described above, when the optical element was tested for 500 hours under an atmosphere filled with $SO_2$ gas of 25°C in temperature, 25 ppm and 75% in relative humidity. Curves 231 and 232 represent respective light transmittances exhibited before and after the test, respectively. Fig. 23 makes it clear that, when the optical element is exposed to the $SO_2$ gas, the light transmittance thereof at the infrared region of wavelength is lowered.

The $SO_2$ gas employed is of a kind which is contained In a relatively high quantity in automotive exhaust gases and is present in our environment. Therefore, it has long been considered an important problem how the optical element can retain its performance for a substantial period of time under the $SO_2$ gas containing environment.

Hereinafter, various preferred embodiments of the present invention will be discussed under respective headings with reference to the associated accompanying drawings.

## First Embodiment

As a result of analysis of the sample exhibiting the reduced light transmittance when tested during the high-temperature and high-humidity endurance test described above, it has been found that the $Sb_2S_3$ film contained a large quantity of Ag transferred from the substrate enough to induce a light absorption or a light scattering, thereby reducing the light transmittance. The first embodiment of the present invention is based on the foregoing finding and has its starting point lying in that an isolation of the $Sb_2S_3$ film from the silver halide substrate might result in a prevention of any possible reduction in light transmittance.

Fig. 1 illustrates a schematic structure of an infrared optical element according to a first embodiment of the present invention. Reference numerals 11, 12 and 13 represent a silver halide substrate made of AgBr, an intermediate thin film of $BiF_3$ and an outermost thin film of $Sb_2S_3$, respectively. The $BiF_3$ film 12 and the $Sb_2S_3$ film 13 were formed to about 40 nm and about 1.7 μm in thickness, respectively. During the film forming the substrate was at normal temperatures.

The preparation of the optical element shown in Fig. 1 was carried out by the use of the vacuum deposition apparatus shown in Fig. 2. During this preparation, the AgBr substrate 23 was placed on the substrate holder 22 within the vacuum vessel 21. Since if the substrate holder 22 is made of aluminum AgBr will react with aluminum enough to deteriorate the AgBr substrate, the substrate holder 22 made of, for example, stainless steel was employed. The exhaust pump 25 was operated to evacuate the vacuum vessel to a substantial vacuum of about $5 \times 10^{-5}$ Torr and $BiF_3$ contained in the crusible 24 was heated by means of the electron gun 26.

The $BiF_3$ material so heated evaporated to deposit on the AgBr substrate to form the $BiF_3$ film 12 and, when the $BiF_3$ film 12 attained a predetermined film thickness, a shutter 27 was closed thereby to complete the intermediate thin film 12.

Thereafter, using $Sb_2S_3$ within the crusible 24, a similar operation was carried out to form a second thin film, that is, the outermost $Sb_2S_3$ film 13, over the previously formed intermediate film 12.

The optical element having the $Sb_2S_3$ film 13 formed on the AgBr substrate 11 with the $BiF_3$ film 12 intervening therebetween was placed under a specific environment to test the reliability thereof, results of which will now be described.

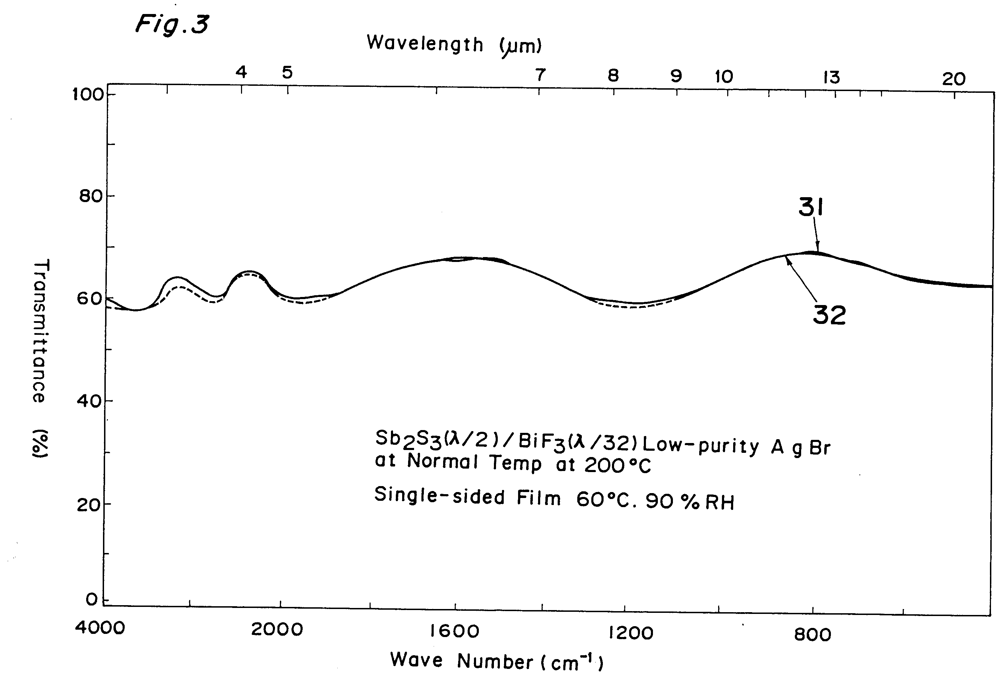

A sample of the optical element prepared in the manner described above according to the first embodiment of the present invention was tested for 1,000 hours at an elevated temperature of 60°C and a high relative humidity of 90%, results of which are shown in Fig. 3 wherein curves 31 and 32 represent respective light transmittances exhibited before and after the test, respectively.

As indicated therein, it is clear that, when allowed to stand under an atmosphere of high temperature and high relative humidity the prior art optical element exhibited an about 10% reduction in light transmittance. This reduction in light transmittance is detrimental in that it leads not only to a reduction in transmission efficiency of light energies, but also a deterioration in quality of light, such as a variation in intensity of light, having passed through the substrate and the thin film.

Fig. 3 makes it clear that the formation of the $BiF_3$ film between the $Sb_2S_3$ film and the AgBr substrate is effective to provide the optical element which does exhibit no reduction in light transmittance. It is also clear that, as compared with the 10% reduction in light transmittance exhibited by the prior art optical element as shown in Fig. 22, the extent to which the light transmittance is reduced In the optical element according to the present invention has been minimized.

Accordingly, the provision of the $BiF_3$ film as the intermediate thin film between the $Sb_2S_3$ film and the AgBr substrate is effective to provide the optical element having an improved resistance to both elevated temperature and high relative humidity.

It is to be noted that, although in the foregoing example the substrate has been described as kept at normal temperature during the formation of the $BiF_3$ and $Sb_2S_3$ films, the film formation at about 200°C has shown similar results.

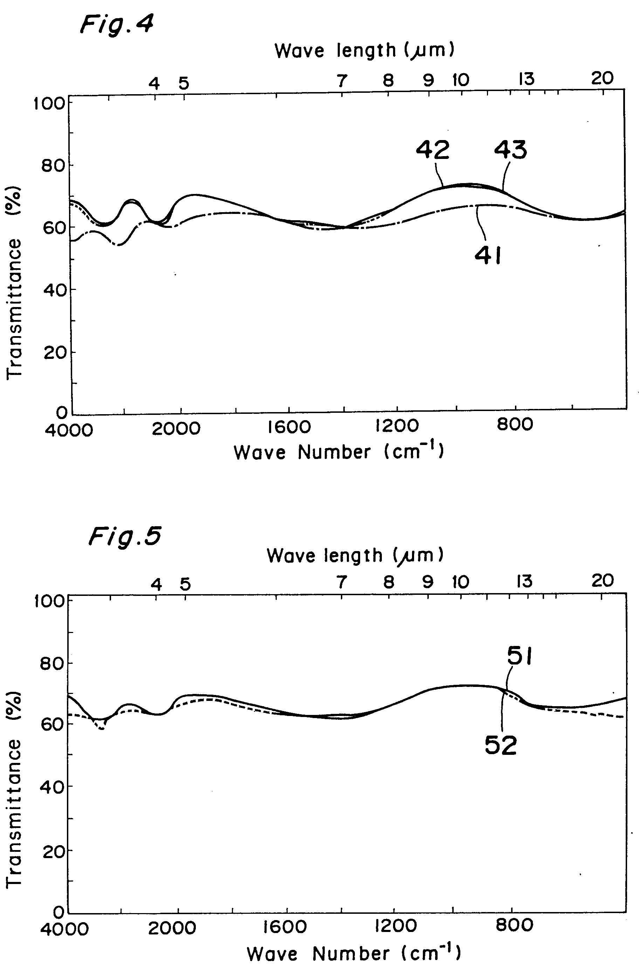

Results of test conducted to determine the degree of reduction in light transmittance of the sample while the latter was placed under a high temperature of 200°C are shown in Fig. 4 wherein a curve 41 represents a change in light transmittance exhibited by the optical element wherein the $Sb_2S_3$ film was formed direct on the substrate and a curve 42 represents that exhibited by the optical element wherein the $Sb_2S_3$ film was formed on the substrate with the intervention of the intermediate $BiF_3$ film. Fig. 4 makes it clear that, as compared with the optical element having the $Sb_2S_3$ film formed direct on the substrate, the optical element having the intermediate $BiF_3$ film intervening between the $Sb_2S_3$ film and the substrate has shown a superior light transmittance.

It is to be noted that, in Fig. 4, a curve 43 represents a change in light transmittance exhibited by the optical element having the intermediate $BiF_3$ film intervening between the $Sb_2S_3$ film and the substrate before the test having been conducted.

Thus, the optical characteristic of the optical element according to the present invention exhibited before and after the test does not substantially vary.

When these were analyzed by the use of an Auger electron spectroscope to determine the quantity of Ag contained in the respective $Sb_2S_3$ films, the optical element having the $Sb_2S_3$ intermediate layer has been found containing a considerably reduced quantity of Ag as compared with that exhibited by the optical element having no intermediate film. Thus, it may be concluded that the quantity of Ag contained in the $Sb_2S_3$ film which has constituted a cause of reduction in light transmittance could be reduced considerably by the provision of the $BiF_3$ intermediate layer thereby to avoid the reduction in light transmittance.

In the foregoing embodiment, although the $BiF_3$ and $Sb_2S_3$ films have been shown as formed on a flat substrate, they may be formed on a curved or lens-shaped substrate. Also, although the $BiF_3$ and $Sb_2S_3$ films have been shown as formed on one of opposite surfaces of the substrate, they may be formed on both surfaces of the substrate.

Again, although the substrate has been made of AgBr, AgCl, AgI or a solid solution thereof may be employed as material for the substrate and, even in such case, similar effects as described above could be obtained.

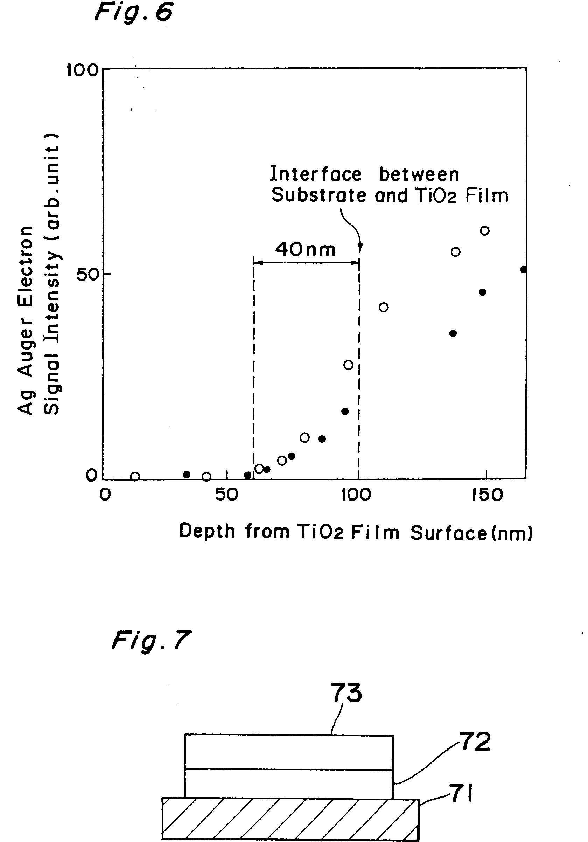

In place of $BiF_3$ for the intermediate film, $TiO_2$ may be employed therefor, an example of which will now be described. As is well known to those skilled in the art, the $TiO_2$ film is known as an extremely stable substance and may be considered useful, but it is also known as having a property of absorbing light of a wavelength longer than about 12 μm. However, where the film thickness is extremely small, it may be assumed that no reduction in characteristic as a result of spectral absorption will occur and it can give an optical characteristic substantially identical with the prior art structure and, therefore, the optical characteristic was tested using the $TiO_2$ film of about 100 nm, a result of which is shown in Fig. 5.

In Fig. 5, a curve 51 represents a change in light transmittance exhibited by the optical element having the $TiO_2$ film as the intermediate layer between the $Sb_2S_3$ film and the substrate, and a curve 52 represents a change in infrared transmittance exhibited by the prior art optical element having the $Sb_2S_3$ film formed direct on the substrate. As shown therein, the both exhibit a similar light transmittance with a few percent variation, and it has been found that the absorption by the $TiO_2$ intermediate film of light of a wavelength longer than about 12 μm brings no substantial problem on thee optical characteristic and, therefore, $TiO_2$ is an extremely promising material.

A sample comprising the AgBr substrate having the $TiO_2$ intermediate film formed to a film thickness of about 100 nm by the use of the vacuum vapor deposition technique while the substrate was held at normal temperatures was tested by the use of the Auger electron spectroscope to analyze elements contained therein a direction of a depth thereof. Results of this test are shown in Fig. 6. In the graph of Fig. 6, blank circles represents the result of analysis conducted to the sample immediately after the film formation, and blackened circles represent that conducted to the sample which had been subjected to a heat-cycle test at 80°C in temperature and 90% in relative humidity to -40°C in temperature over 10 cycles.

From the graph of Fig. 6, it is clear that, even after the film formation, the depth over which Ag has been diffused when measured after the sample was subjected to the heat-cycle test is about 40 nm which does not vary so much as compared with the sample before subjected to the heatcycle test. Accordingly, it has been found that, if the $TiO_2$ intermediate film has a film thickness of about 40 nm or greater, the diffusion of Ag can be advantageously suppressed.

Also, no deterioration was found in infrared transmittance when the sample constructed according to the present invention was tested for 1,000 hours at a high temperature of 60°C and at a high relative humidity of 90%.

Thus, it may be concluded that, if the film thickness of about 40 nm or greater is chosen for the $TiO_2$ inter-

mediate film, the resultant optical element can exhibit a high resistance to both an elevated temperature and a high relative humidity. Accordingly, not only $BiF_3$, but also $TiO_2$ may be said to be an useful material for the intermediate film formed according to the present invention.

In describing the first embodiment of the present Invention, reference has been made to the use of any one of $BiF_3$ and $TiO_2$ as material for the intermediate film. However, it has been found that the use of even $CeF_3$ as material for the intermediate film has shown an excellent infrared transmittance and, therefore, $CeF_3$ can be used as a useful material for the intermediate film in the practice of the present invention. Specifications of the various material used for the intermediate layer, which have been examined for the purpose of the present invention, are tabulated in Table 1.

Table 1 makes it clear that, if the intermediate film is made of material, such as inorganic oxide or inorganic fluoride, which does not react with the halogenated substrate and if it has a film thickness of about a few tens nanometers, the reduction in light transmittance can be minimized effectively. Accordingly, it may be said that the use of material such as inorganic oxide or inorganic fluoride for the intermediate film is extremely useful in the practice of the present invention.

**Table 1**

| Intermediate Film | Film Thikness | Substrate Temperature | Results of Test at 60°C & 90%RH, 1000hr |
|---|---|---|---|
| $TiO_2$ | 40 nm | Norm. Temp. 200°C | Excellent |
| $TiO_2$ | 100 nm | Norm. Temp. 200°C | Excellent |
| $CeF_3$ | 40 nm | Norm. Temp. 200°C | Excellent |
| $CeF_3$ | 1,000 nm | Norm. Temp. 200°C | Excellent |
| $BiF_3$ | 40 nm | Norm. Temp. 200°C | Excellent |
| $BiF_3$ | 1,000 nm | Norm. Temp. 200°C | Excellent |

Also, Table 1 shows that, not only when the substrate temperature is normal temperatures, but also when the substrate is held at 200°C, a favorable light transmittance performance can be realized.

This is illustrative of the results of the high temperature high humidity tests and, even under the environment in which the temperature is very high during the film formation, the intermediate film is effective to minimize a diffusion of Ag, contained in the substrate, into the $Sb_2S_3$ film.

This is particularly advantageous where the $Sb_2S_3$ film is formed at an elevated temperature or where a film of a different material is formed over the $Sb_2S_3$ film at an elevated temperature, and may be said to be useful when the film is to be formed using material which, unless an elevated temperature is employed for the film forming, would not bring about a sufficient characteristic.

It is to be noted that, although in the foregoing embodiment the $Sb_2S_3$ film has been described having the film thickness of about 1.7 $\mu$m, and since this film exhibits a substantial transparency at a wavelength region of about 0.7 to 25 $\mu$m, an infrared optical element useful at this wavelength region can be realized with a mere change effected to the film thickness.

It is also to be noted that reference has been made to the formation of the single intermediate film, no problem will occur even where a plurality of intermediate films are employed.

As hereinbefore described, the provision of the intermediate film between the silver halide substrate and the $Sb_2S_3$ film is effective to suppress any possible deterioration of the light transmittance at a high temperature and a high humidity and is therefore extremely useful in a practical view of point.

**Second Embodiment**

We have found that when the prior art optical element wherein the $Sb_2S_3$ film was coated direct on the silver halide substrate was tested as to its resistance to $SO_2$, the light transmittance thereof was deteriorated. A close examination of a surface of the sample of the prior art optical element has shown that the surface of the $Sb_2S_3$ film after the test was faded to a gold color whereas that before the test had presented a silver color.

Also, when the surface of the $Sb_2S_3$ film was analyzed using an X-ray photoelectron analyzer and an Auger electron spectroscope, it was revealed for the first time that the surface of the $Sb_2S_3$ film was oxidized having been covered by a layer of $Sb_2S_3$ in a depth of about a few hundreds to a few thousands nanometers. Accord-

EP 0 518 551 A1

ingly, the results of experiments outlined above drove us to think that, if the surface of the $Sb_2S_3$ film is covered by a dissimilar material to avoid any possible oxidization of the $Sb_2S_3$ film, the reduction in light transmittance might be suppressed. The following embodiment is based on this new finding.

Fig. 7 illustrates a schematic structure of the infrared optical element according to this second embodiment of the present invention. In Fig. 7, reference numerals 71, 72 and 73 represents a silicon substrate, a first layer defined by a $Sb_2S_3$ film and a second or outermost layer defined by a $TiO_2$ film, respectively. Unlike the prior art structure, the optical element according to this embodiment is of a double layered structure including the $Sb_2S_3$ film covered by the $TiO_2$ film.

The optical element shown in Fig. 7 was prepared in a manner similar to that in the foregoing embodiment. The $Sb_2S_3$ and $TiO_2$ films were formed so as to have a film thickness of about 1.7 microns and a film thickness of about 20 nm, respectively, and the substrate was held at normal temperatures during the film forming.

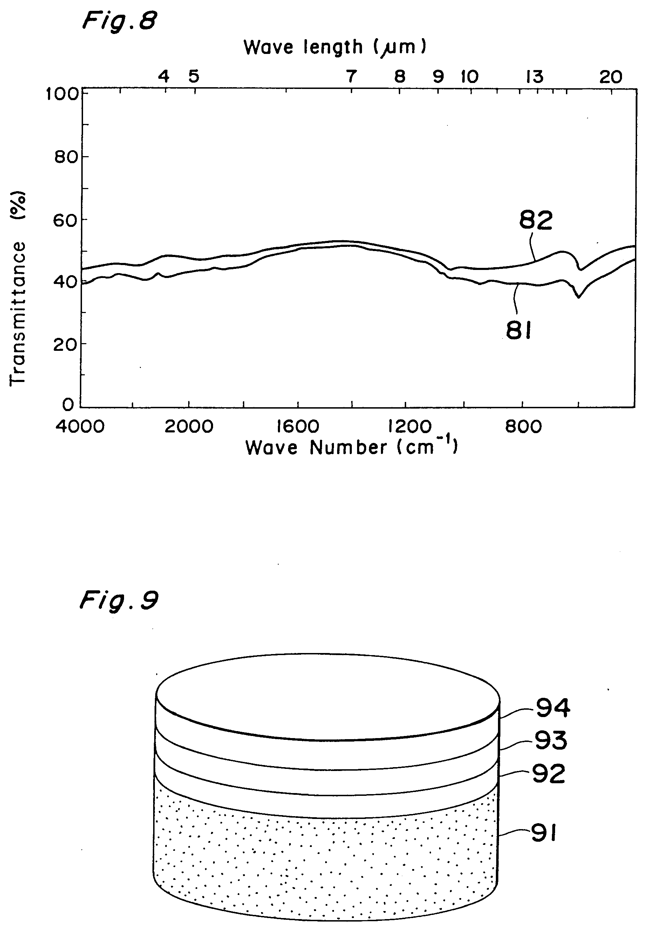

Fig. 8 illustrates results of tests conducted on the respective samples of the optical element prepared according to this second embodiment of the present invention and the prior art structure wherein the $Sb_2S_3$ film was formed direct on the silicon substrate, to determine a resistance thereof to the $SO_2$ gas. In Fig. 8, curves 81 and 82 represent respective changes in infrared transmittance exhibited by the prior art structure and the structure according to this embodiment.

Fig. 8 makes it clear that the optical element according to this embodiment of the present invention can exhibit a higher transmittance than that exhibited by the prior art structure having no $TiO_2$ film. This appears to have resulted from the fact that, while in the prior art structure the $Sb_2S_3$ film is oxidized accompanied by a deterioration in characteristic, the use of the $TiO_2$ film according to the present invention is effective to avoid the oxidization of the $Sb_2S_3$ film and no deterioration take place in characteristic accordingly.

Accordingly, with the structure of the present invention, the problem associated with the oxidization of the $Sb_2S_3$ film can be resolved and it is clear that the highly reliable optical element which is free from any deterioration in optical characteristic even under severe condition full of $SO_2$ gas can be realized. Therefore, it may be concluded that the addition of the $TiO_2$ film to the surface layer is extremely useful.

In describing the second embodiment of the present invention, the substrate has been described as made of silicon. However, any material generally used as a substrate for the optical element may be employed for the substrate. In addition, the substrate may have a curved or lens-like shape.

Also, although the $TiO_2$ film has been used as the outermost film, the outermost film may be formed of any material having a resistance to environment, for example, resistant to $SO_2$, acid, alkaline and $H_2S$, and of a kind which does not substantially absorb infrared rays of light.

The possibility of use of $CeF_3$ as a material for the outermost film has been examined and, as a result thereof, it has been found that, if the film thickness is equal to or greater than about 20 nm, the use of the $CeF_3$ film as the outermost film does not result in any deterioration of the performance of the infrared optical element even after subjected to the $SO_2$ gas test. Thus, it may be concluded that not only $TiO_2$, but also the above described material, is useful as a material for the outermost film.

Furthermore, although in the foregoing second embodiment of the present invention, the $Sb_2S_3$ film has been described as formed so as to contact the $TiO_2$ film, an additional thin film may be formed between the $Sb_2S_3$ and $TiO_2$ film. Since the $TiO_2$ film is effective to avoid the oxidization of the $Sb_2S_3$ film, the useof the $TiO_2$ film as the outermost film suffices. Thus, the present invention represented by the second embodiment thereof as discussed above may be said to be extremely useful.

**Third Embodiment**

A third embodiment of the present invention will now be described.

As hereinbefore discussed, the prior art structure has a problem in that, as shown in Fig. 22, the formation of the $Sb_2S_3$ film has resulted in a deterioration of the light transmittance as compared with that exhibited solely by the substrate. The third embodiment of the present invention is intended to eliminate this problem and is to provide the Infrared optical element which does not exhibit any deterioration of the light transmittance even if the $Sb_2S_3$ film is formed on the substrate.

A structure of the infrared optical element according to this embodiment is shown in Fig. 9, in which reference numeral 91 represents a substrate made of AgBr; reference numeral 92 represents a first film made of $CeF_3$; reference numeral 93 represents a second film made of $Sb_2S_3$; and reference numeral 94 represents a third film made of material capable of exhibiting a transparency in the infrared region and having an index of refraction expressed by n.

These films 92 to 94 were formed on the AgBr substrate in a manner similar to that described in connection with the first embodiment of the present invention. However, the $CeF_3$ film 92 has a film thickness of 40 nm, and an optical film thickness of each of the $Sb_2S_3$ film 93 and the third film 94 is chosen to be $\lambda/2$ and $\lambda/4$, re-

7

spectively, wherein $\lambda$ represents a center wavelength.

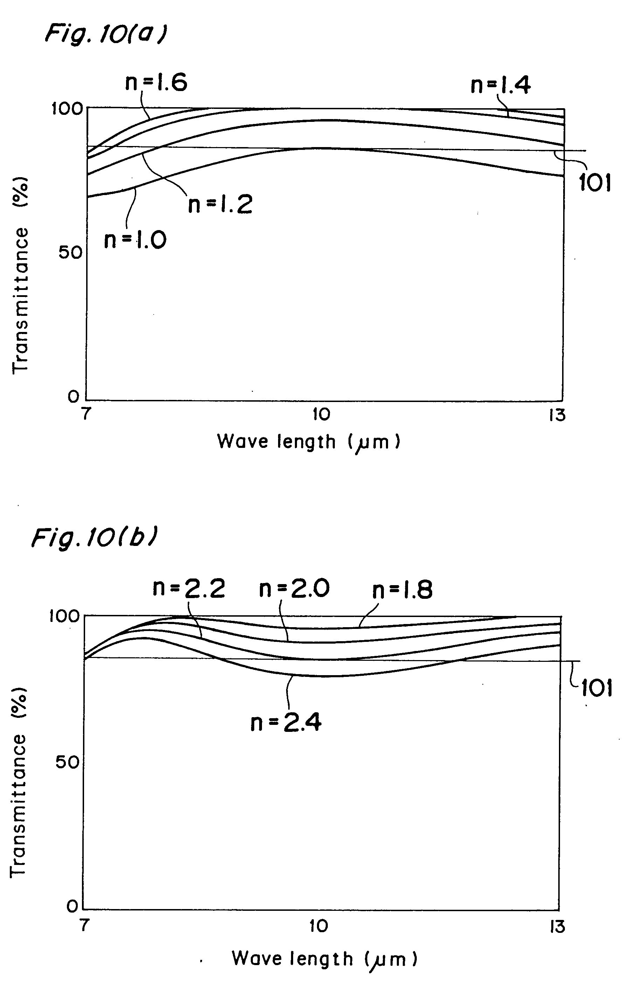

Fig. 10 illustrates the light transmittance of the optical element according to this embodiment wherein the index n of refraction of the third film is shown as a parameter. The center wavelength was chosen to be 10 $\mu$m, and the respective indexes of refraction of the AgBr substrate, $CeF_3$ and the $Sb_2S_3$ film were chosen to be 2.17, 1.58 and 3.0.

This figure makes it clear that, if the index n of refraction of the third film is chosen to be of a value not greater than 2.2, a reflection preventing effect can be brought about at the center wavelength thereof, making it possible to realize a higher transmittance than the transmittance exhibited by the AgBr substrate 101, thereby to permitting the resultant optical element to exhibit an extremely useful performance. Accordingly, it may be concluded that the use of the material having such an index n of refraction as a material for the third film is extremely useful.

Also, according to this embodiment, the $CeF_3$ film is introduced as an intermediate thin film between the AgBr substrate and the $Sb_2S_3$ film so that the resultant optical element can exhibit not only an excellent resistance to the elevated temperature and the high humidity described in connection with the first embodiment of the present invention, but also the reflection preventing effect. However, if only the reflection preventing effect is desired to be realized in the optical element according to this embodiment, the $CeF_3$ film may not be employed as the intermediate thin film because both of the $Sb_2S_3$ film and the material having the index of refraction not greater than 2.2 serve the purpose of accomplishing the reflection preventing effect.

Although the $CeF_3$ film has been described as used as the intermediate thin film, a film of inorganic oxide or inorganic fluoride or a plurality of films made of a plurality of material selected therefrom may result in similar effects.

Also, the substrate may be made of AgCl, AgI or a solid solution thereof other than AgBr and may have any shape.

An example in which the film made of $CeF_3$ which is a material having an index of refraction not greater than 2.2, i.e., having an index of refraction of 1.58, is employed will now be discussed. The reason for the selection of the $CeF_3$ film is not only because it has a low index of refraction, but also because $CeF_3$ has many excellent characteristics, i.e., chemically stable, less in moisture absorbing property and highly scratch resistance.

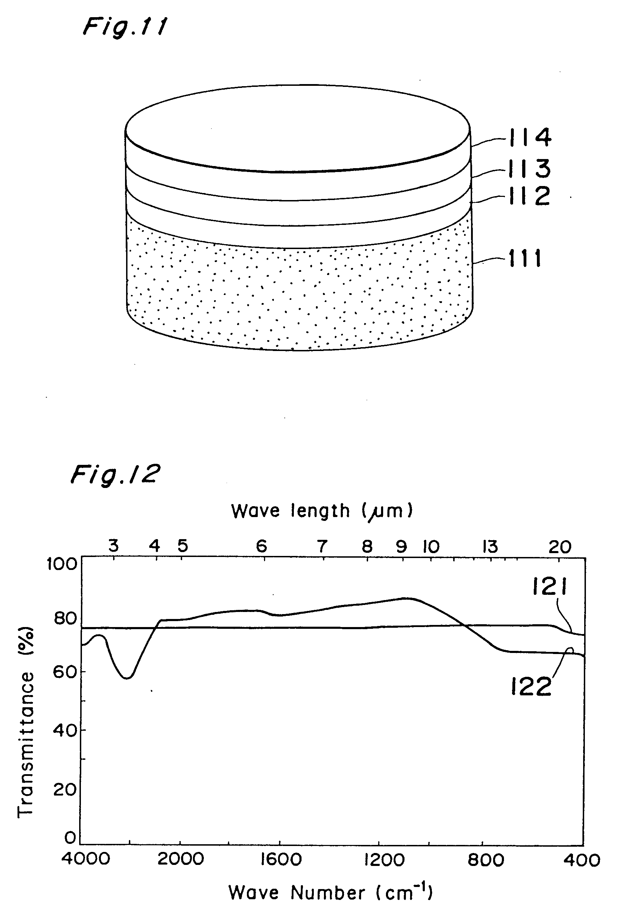

A structure of the optical element according to this embodiment is shown in Fig. 11. As shown therein, the substrate 111 is made of AgBr; the first film 112 is made of $CeF_3$; the second film 113 is made of $Sb_2S_3$; and the third film 114 is made of $CeF_3$. These films were formed by the use of the vacuum vapor deposition method described in connection with the first embodiment of the present invention while the substrate was kept at 200°C.

The $CeF_3$ film 112 was formed to a film thickness of 40 nm, and an optical film thickness of each of the $Sb_2S_3$ film 113 and the $CeF_3$ film 114 is chosen to be $\lambda/2$ and $\lambda/4$, respectively, wherein $\lambda$ represents a center wavelength.

The first film, that is, the $CeF_3$ film, is utilized to isolate the $Sb_2S_3$ film from the substrate as is the case with that described in connection with the first embodiment of the present invention. The third film, that is, the $CeF_3$ film, is used not only to enhance a reflection preventing effect, but also to avoid any possible oxidization of the $Sb_2S_3$ film as described in connection with the second embodiment of the present invention.

Fig. 12 illustrates the infrared transmittance exhibited by the infrared optical element prepared according to the third embodiment of the present invention. At this time, the center wavelength was chosen to be 9 $\mu$m.

In Fig. 12, a curve 121 represents a characteristic of the substrate made of AgBr, and a curve 122 represents a characteristic of the structure according to the third embodiment of the present invention. The graph of Fig. 12 makes it clear that according to the third embodiment of the present invention, due to the reflection preventing effect, a high light transmittance can be obtained at a wavelength region of 4 to 11 $\mu$m. Accordingly, it may be concluded that the optical element according to this embodiment has an extremely high light transmittance.

The structure according to this embodiment was subjected to the high-temperature, high-humidity test at 60°C in temperature and 90% in relative humidity for 1,000 hours, to an environmental resistance test under an atmosphere full of $SO_2$, $H_2S$ and $NH_3$ gases, and also to a light-resistance test for 1,000 hours under a direct sun lighting, Results of these tests have revealed that no reduction was found in the infrared transmittance. Accordingly, it is clear that not only does the optical element according to this embodiment have a high light transmittance, but also it has a high reliability.

The reason therefor is partly because the structure according to this embodiment satisfies all requirements necessary to accomplish the reflection preventing effect and partly because, as discussed in connection with any one of the first and second embodiments of the present invention, the structure includes the intermediate thin film between the substrate and the $Sb_2S_3$ film or the $CeF_3$ film deposited on the $Sb_2S_3$ film. Thus, the present invention represented by the third embodiment thereof is believed to be extremely useful.

It is, however, to be noted that, when during the formation of the CeF$_3$ film the substrate is held at normal temperatures, a bondability between the substrate and the thin film would be poor, as evidenced by a result of test in which a portion of the thin film has been peeled off from the substrate when the sample having a film thickness in the case of 10 μm in center wavelength was subjected to a heat-cycle test. Accordingly, the sample having the thin film formed while the substrate was held at normal temperatures, cannot be utilized in practice under an environment where thermal change is considerable.

However, where as is the case with this embodiment of the present invention the film formation was carried out while the substrate was heated to about 200°C, no film peeling took place even when subjected to the same test. Accordingly, the use of a temperature of about 200°C to which the substrate is to be heated during the film formation is said to be extremely useful in improving a reliability of the thin film.

It is to be noted that, in the case of the structure wherein the Sb$_2$S$_3$ film is held in direct contact with AgBr such as in the prior art, the film formation with the substrate held at about 200°C may result in a reduction in light transmittance.

In contrast thereto, in the practice of the present invention, the intervention of the intermediate thin film effectively avoids any possible reduction in transmittance even though the temperature is high during the film formation and, therefore, the structure is said to be extremely useful in practice.

In view of the foregoing, the optical element according to the third embodiment of the present invention may be regarded practically extremely useful in that, while it has an excellent infrared transmittance and 'also an extremely high reliability in respect of resistance to high temperature and high humidity, resistance to environment, resistance to light and bonding strength, the use of silver halide as material for the substrate makes it possible to achieve a mass-production.

Although in the third embodiment of the present invention, the CeF$_3$ film has been described as having an optical film thickness of λ/4 (i.e., about 1.5 μm when the center wavelength is 10 μm), it may be equal to or greater than about 20 nm as discussed in connection with the second preferred embodiment of the present invention. Although a smaller film thickness will lower the reflection preventing effect in the infrared region, the light transmittance can, of course, be increased.

### Fourth Embodiment

A fourth embodiment of the present invention will now be described in which, as a low refractive material having an index of refraction not greater than 2.2, a BiF$_3$ film is employed.

The BiF$_3$ film is a very useful material not only because it has an index of refraction of about 1.65 effective to accomplish the reflection preventing effect, but also it can exhibit a high light transmittance at the infrared region of wavelength. When this film was tested at high temperature and high relative humidity, it has been found that the light transmittance decreased. The fourth embodiment of the present invention is based on an contemplation that, if this problem is overcome, the infrared optical element having a high light transmittance can be realized.

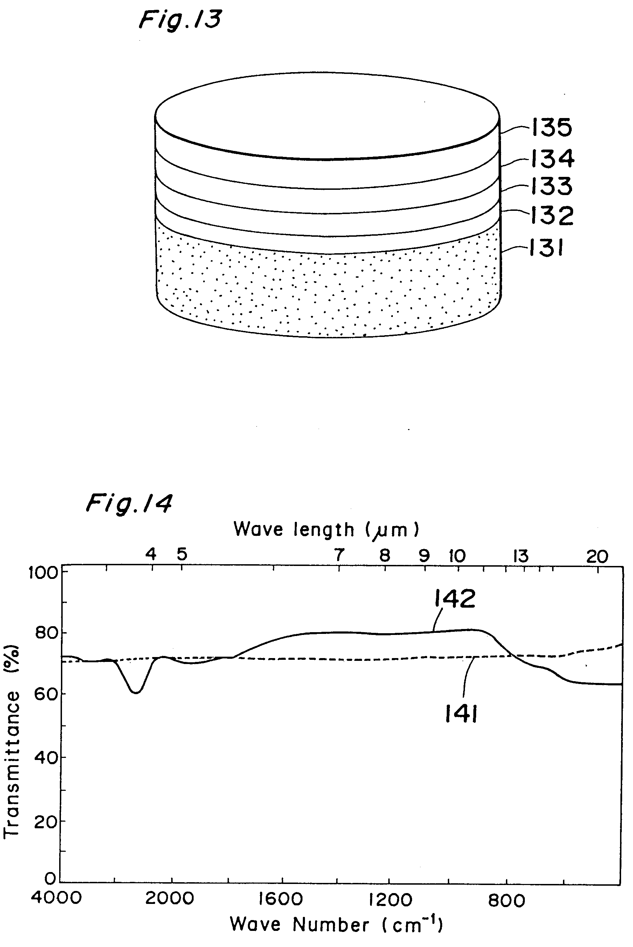

Fig. 13 illustrates a structure of the infrared optical element according to this embodiment of the present invention, wherein reference numeral 131 represents a substrate made of AgBr; reference numeral 132 represents a first film made of CeF$_3$; reference numeral 133 represents a second film made of Sb$_2$S$_3$; reference numeral 134 represents a third film made of BiF$_3$; and reference numeral 135 represents a fourth film made of CeF$_3$.

The film formation was thoroughly carried out by the use of a vapor deposition technique with the substrate held at normal temperatures. At this time, the CeF$_3$ film 132 was formed to a film thickness of 40 nm, and an optical film thickness of each of the Sb$_2$S$_3$ film 133 and the BiF$_3$ film 134 was chosen to be λ/2 and λ/4, respectively, wherein λ represents a center wavelength. The fourth embodiment is different from the third embodiment in that the CeF$_3$ film formed over the BiF$_3$ film has a very small film thickness of about 20 nm. Since the CeF$_3$ film is a highly chemically stable material, the deposition of this CeF$_3$ film over the BiF$_3$ film has appeared to be effective to increase the reliability while maintaining a high light transmittance.

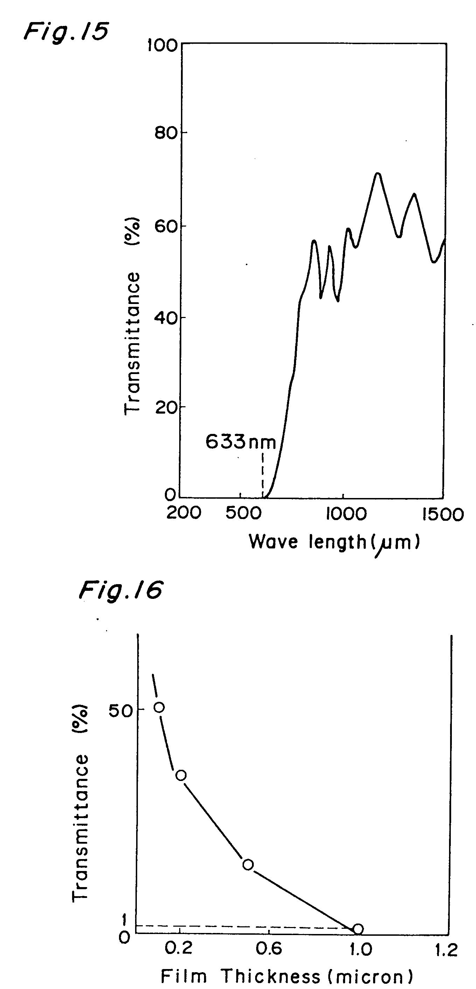

Fig. 14 illustrates infrared transmittances exhibited by the infrared optical element according to the fourth embodiment of the present invention. At this time, the center wavelength was chosen to be 8 μm.

In Fig. 14, a curve 141 represents a characteristic of the substrate made of AgBr and a curve 142 represents a characteristic of the structure according to this embodiment. Fig. 14 makes it clear that according to the fourth embodiment of the present invention, due to the reflection preventing effect, a high light transmittance can be obtained at a wavelength region of 5.5 to 12 μm.

The structure according to this embodiment was subjected to the high-temperature, high-humidity test at 60°C in temperature and 90% in relative humidity for 1,000 hours, to an environmental resistance test under an atmosphere full of $SO_2$, $H_2S$ and $NH_3$ gases, to a light-resistance test for 1,000 hours under a direct sun lighting and also to a heat-cycle test to determine the bondaibility. Results of these tests have revealed that no substantial reduction was found in the infrared transmittance. Accordingly, it is believed that, since the outermost $CeF_3$ film serves as a protective coating for the third or $BiF_3$ film, the reliability has been increased.

Thus, this embodiment of the present invention brings about a remarked effect in that, even though a relatively less durable material such as $BiF_3$ is employed, the reliability in respect of the resistance to environment can be increased while the high transmittance is maintained.

Also, similar examinations have been made in which $CaF_2$ (1.31 in index of refraction) or $PbF_2$ (1.68 in index of refraction) was employed for the third film and, as a result thereof, it has been confirmed that, even though the third film was made of $CaF_2$ or $PbF_2$, the high infrared transmittance and the high reliability could be secured.

Although in the description of the fourth embodiment of the present invention the intermediate film intervening between the silver halide substrate and the $Sb_2S_3$ film has been made of $CeF_3$, it may be a film made of inorganic oxide or inorganic fluoride, or a multi-layered structure made a combination thereof.

Thus, with the present invention, the infrared optical element capable of exhibiting a high reliability can be accomplished.

Also, although the outermost film has been described as employed in the form of a $CeF_3$ film, it may be substituted by a $TiO_2$ film. Again, any material may be employed if it serves to protect the third film and has an excellent property in optical characteristic and a high reliability.

Furthermore, the substrate having been described as made of AgBr may also be made of AgCl, AgI or a solid solution thereof and may have any shape as is the case with that described in connection with the first embodiment of the present invention.

## Fifth Embodiment

Hereinafter, a fifth preferred embodiment of the present invention will be described.

The light transmittance exhibited at a ultraviolet region of wavelength by the prior art structure having a $Sb_2S_3$ film of about 1.7 micron is shown in Fig. 15. As shown therein, it is clear that the transmittance exhibited by the prior art structure is substantially zero at 633 nm of a wavelength of a He-Ne laser and, at the same time, rays of light of a wavelength to which the halogenated substrate is sensitive can be shielded.

On the other hand, in adjusting an optical system using optical elements, a He-Ne laser is generally employed and the transmittance is required to be about 1%.

Accordingly, since in the prior art structure no rays of light pass substantially, there has been a problem in that it is very difficult to adjust the optical system using the He-Ne laser.

We have thought that, if the film thickness of the $Sb_2S_3$ film is reduced, the transmittance of the He-Ne laser would be improved and, therefore, an interrelation between the film thickness of the $Sb_2S_3$ film and the transmittance was experimentally determined, a result of which is shown in Fig. 16.

The graph of Fig. 16 makes it clear that the transmittance increases with decrease in film thickness and about 1.0 µm in film thickness increases the transmittance to about 1%.

Accordingly, if the film thickness of the $Sb_2S_3$ film is chosen to be equal to or smaller than about 1 µm, the He-Ne laser can pass and, therefore, the existing optical adjustment device can be utilized, and this may be said to be an extremely great merit in a practical point of view of the optical element.

However, a mere increase in film thickness while the prior art structure is retained tends to lower the transmittance at the infrared region because of an interference of the thin films (10% or higher). Because of this, it has been very difficult to satisfy simultaneously the transmittance of the He-Ne laser and the transmittance of the Infrared rays of light.

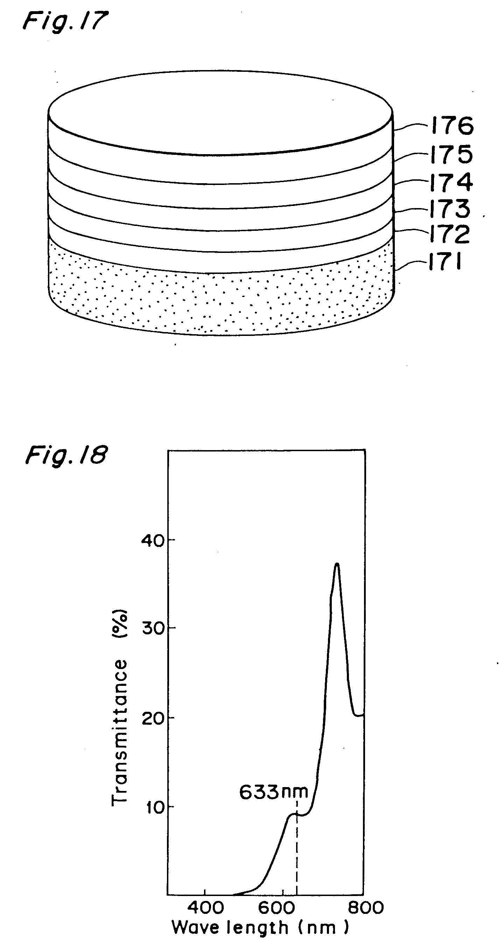

The fifth embodiment of the present invention has been devised to solve this problem and represents such a structure as shown in Fig. 17. In Fig. 17, the optical element shown therein comprises a substrate 171 made of AgBr and having first, third and fifth films 172, 174 and 176, all made of $CeF_3$, and second and fourth films 173 and 175 both made of $Sb_2S_3$.

The film formation was thoroughly carried out by the use of a vapor deposition technique with the substrate held at 200°C. At this time, the $CeF_3$ film 172 was formed to a film thickness of 40 nm, an optical film thickness of each of the $Sb_2S_3$ films 173 and 175 was chosen to be about $\lambda/16$, and an optical film thickness of the $CeF_3$ film 174 was chosen to be about $\lambda/8$. The $CeF_3$ film 176, which is the outermost film, was chosen to be 20 nm.

The first and fifth films 172 and 176 both made of $CeF_3$ serves to enhance the reliability associated with the specific environment as discussed in connection with any one of the first and second embodiments of the present invention. On the other hand, the second, third and fourth films 173, 174 and 175 serves to shield rays of light of 0.4 microns or shorter to enhance the transmittance of the He-Ne laser and also to achieve a reflection preventing effect at the infrared region of light thereby to enhance the transmittance.

The structure necessary to accomplish the reflection prevention according to the fifth embodiment of the present invention is quite different from that described in connection with any one of the third and fourth embodiments thereof and is such that, while two separate $Sb_2S_3$ films are employed for the second and fourth films 173 and 175, the third film 174 made of $CeF_3$ which is a material having a low index of refraction is employed between these films 173 and 175.

Results of examination has shown that a mere change in film thickness in the structure described in connection with any one of the third and fourth embodiments of the present invention does not render it easy to solve the above described problem and that the use of the two separate $Sb_2S_3$ films with the intervention of the material having the low Index of refraction therebetween is effective to solve the above described problem.

Fig. 18 illustrates a light transmittance exhibited by the five-layered structure according to this embodiment of the present invention at a wavelength region ranging from ultraviolet wavelength to visible wavelength. The center wavelength was chosen to be 10 μm.

With the fifth embodiment of the present invention, it is clear that an extremely high transmittance, high of about 10% at a wavelength of 633 nm, can be realized. At the same time, the rays of light of a wavelength to which the halogenated substrate is sensitive can also be shielded.

Results of examination have made it clear that, if the film thickness of the $Sb_2S_3$ film is equal to or greater than about 0.4 microns, the rays of light of a wavelength to which the halogenated substrate is sensitive can be shielded.

Therefore, in order for the light transmittance at 633 nm in wavelength to be equal to or higher than 1% and, at the same time, in order to prevent the silver halide substrate from being sensitized, it may be concluded that the film thickness of the $Sb_2S_3$ film should be within the range of 0.4 to 1.0 microns.

The $Sb_2S_3$ film employed in the practice of the fifth embodiment of the present invention has a film thickness of 0.42 micron, certainly satisfying the above discussed requirements.

The infrared transmittance exhibited by the fifth embodiment of the present invention is shown in Fig. 19, wherein a curve 191 represents a characteristic exhibited by the substrate made of AgBr and a curve 192 represents a characteristic exhibited by the structure according to this embodiment of the present invention. Fig. 19 makes it clear that according to the fifth embodiment of the present invention, the reflection preventing effect is observed in a relatively wide wavelength range of 7.5 to 20 μm, giving a high transmittance.

Accordingly, with the structure according to this embodiment of the present invention, both of the transmittance at 633 nm in wavelength and that in the infrared region, which have not been accomplished by the prior art structure, can be accomplished simultaneously and, therefore, It may be said to be an extremely useful invention.

The structure according to this embodiment was subjected to the high-temperature, high-humidity test at 60°C in temperature and 90% in relative humidity for 1,000 hours, to an environmental resistance test under an atmosphere full of $SO_2$, $H_2S$ and $NH_3$ gases, and also to a light-resistance test for 1,000 hours under a direct sun lighting, Results of these tests have revealed that no substantial reduction was found in the infrared transmittance. Accordingly, it is believed to be an extremely highly reliable optical element. This is not only because the structure according to the fifth embodiment is of a type effective to accomplish the reflection preventing effect, but also because it is of a structure effective to increase the reliability as discussed in connection with any one of the first and second embodiments of the present invention.

Thus, the infrared optical element according to this embodiment can achieve not only a high transmittance at the infrared region of wavelength, but also a high transmittance at a wavelength (633 nm) of the He-Ne laser. Also, it is effective to shield rays of light of a wavelength shorter than about 0.4 micron to which the halogenated substrate is sensitive, and, since no deterioration in optical characteristic is found in various reliability tests, the optical element according to this embodiment is believed to be an extremely practically valuable invention.

Furthermore, the five-layered structure according to this embodiment has a total film thickness which is, so far illustrated, 1.2 micron, in contrast to the total film thickness of about 1.7 microns required in the prior art structure, and therefore, the relatively small total film thickness suffices to permit the optical element to exhibit an excellent optical characteristic. Even as compared with the structure designed to enhance the reflection preventing effect discussed in any one of the third and fourth embodiments of the present invention, the total film thickness employed in the fifth embodiment is very small. This means that, not only can the time required to form the entire films be reduced, but also the cost incurred in purchasing material can be reduced, making the present invention to be extremely useful in practice.

It is to be noted that the third film in the fifth embodiment of the present invention has been described as employed in the form of the $CeF_3$ film. In place of it, a $BiF_3$, $PbF_2$ or $CaF_2$ film may be employed. Provided that material having a relatively small index of refraction and capable of exhibiting a transparency at the infrared region of wavelength is employed, the reflection preventing effect can be realized.

Also, in the practice of the fifth embodiment of the present invention, the intermediate thin film between the silver halide substrate and the $Sb_2S_3$ film has been described as made of $CeF_3$, However, it may be a film made of inorganic oxide or inorganic fluoride, or a multi-layered structure made a combination thereof.

Also, although the outermost film has been described as employed in the form of a $CeF_3$ film, it may be substituted by a $TiO_2$ film as discussed in connection with the second embodiment of the present invention.

Again, the use of the same material for the first, third and fifth films such as in the fifth embodiment of the present invention is advantageous in forming films as compared with different material being used therefor. Accordingly, the use of $CeF_3$ for the first, third and fifth film is extremely useful.

Furthermore, the substrate having been described as made of AgBr may also be made of AgCl, AgI or a solid solution thereof and may have any shape as is the case with that described in connection with the first embodiment of the present invention.

As hereinbefore discussed, the present invention is such that the optical element comprising the intermediate thin film formed between the substrate of silver halide and the thin film of $Sb_2S_3$ and the outermost film made of material excellent in resistance to environment. Therefore, it is possible to provide the infrared optical element capable of retaining the excellent optical characteristic in the infrared region of wavelength and having the extremely high reliability in terms of resistance to high temperature and humidity, resistance to environment and resistance to light.

Although the present invention has been described connection with preferred embodiments thereof with reference to the accompanying drawings, it is to be noted that various changes and modifications are apparent to those skilled in the art. Such changes and modifications are to be construed as included within the scope of the present invention as defined by the appended claims unless they depart therefrom.

## Claims

1. An infrared optical element which comprises a substrate made of silver halide; a thin film of $Sb_2S_3$ deposited over the substrate; and an intermediate thin film intervening between the substrate and the thin film.

2. The infrared optical element as claimed in Claim 1, wherein said intermediate thin film is made of a material selected from the group consisting of inorganic oxide and inorganic fluoride.

3. The infrared optical element as claimed in Claim 2, wherein said material is $TiO_2$.

4. The infrared optical element as claimed in Claim 2, wherein said inorganic fluoride includes $BiF_3$ and $CeF_3$.

5. An infrared optical element which comprises a substrate; at least one thin film of $Sb_2S_3$ deposited on the substrate; and an outer thin film of $TiO_2$ and $CeF_3$ deposited on the $Sb_2S_3$ film.

6. An infrared optical element which comprises a substrate made of silver halide; a first thin film of $CeF_3$ deposited on the substrate; a second thin film of $Sb_2S_3$ deposited on the first thin film; and a third thin film made of material having an index of refraction not greater than 2.2 and capable of exhibiting a transparency at an infrared region of wavelength.

7. An infrared optical element which comprises a substrate made of silver halide; a first thin film of $CeF_3$ deposited on the substrate; a second thin film of $Sb_2S_3$ deposited on the first thin film; and a third thin film of $CeF_3$ deposited on the second thin film.

8. An infrared optical element which comprises a substrate of silver halide; a first thin film of $CeF_3$ deposited on the substrate; a second thin film of $Sb_2S_3$ deposited on the first thin film; a third thin film of $BiF_3$ deposited on the second thin film; and a fourth thin film of $CeF_3$ deposited on the third thin film.

9. An infrared optical element which comprises a substrate of silver halide; a first thin film of $CeF_3$ deposited on the first thin film; a second thin film of $Sb_2S_3$ deposited on the substrate; a third thin film of $CeF_3$ deposited on the second thin film; a fourth thin film of $Sb_2S_3$ deposited on the third thin film; and a fifth thin film of $CeF_3$ deposited on the fourth thin film.

Fig. 1

Fig. 2

Fig.3

Wavelength (μm)

Transmittance (%)

Wave Number (cm⁻¹)

$Sb_2S_3(\lambda/2)/BiF_3(\lambda/32)$ Low-purity AgBr
at Normal Temp at 200°C

Single-sided Film 60°C. 90% RH

31

32

EP 0 518 551 A1

*Fig.4*

Wave length (μm)

*Fig.5*

Wave length (μm)

*Fig.6*

Interface between
Substrate and TiO₂ Film

40nm

Depth from TiO₂ Film Surface (nm)

Ag Auger Electron Signal Intensity (arb.unit)

*Fig.7*

73

72

71

16

## Fig.8

Wave length (μm)

Transmittance (%)

Wave Number (cm⁻¹)

## Fig.9

*Fig. 10(a)*

*Fig. 10(b)*

*Fig.11*

114
113
112
111

*Fig.12*

Wave length (μm)

121

122

Transmittance (%)

Wave Number (cm⁻¹)

## *Fig.13*

— 135
— 134
— 133
— 132
— 131

## *Fig.14*

Wave length (μm)

142

141

*Fig.15*

*Fig.16*

*Fig.17*

*Fig.18*

*Fig. 19*

Wave length (μm)

*Fig. 20*

*Fig. 2 l*

Wave length ( μm )

*Fig. 22*

Wavelength ( μm )

*Fig. 23*

Wave length ($\mu$m)

**European Patent Office**

## EUROPEAN SEARCH REPORT

Application Number

EP 92 30 5097

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 642 367 (PFUND) <br> * column 1, paragraph 6; figure 1 * <br> --- | 1,5-9 | G02B1/02 <br> G02B1/10 |
| A | EP-A-0 147 946 (SUMITOMO ELECTRIC INDUSTRIES) <br> * page 5, line 24 - page 7, line 21; figure 1 * <br> --- | 1,2,6-9 | |
| A | PATENT ABSTRACTS OF JAPAN <br> vol. 15, no. 172 (P-1197)30 April 1991 <br> & JP-A-3 036 501 ( NIPPON HIKIYUUMEN LENS K.K. ) <br> 18 February 1991 <br> * abstract * <br> --- | 1,2,4, 6-9 | |
| A | PATENT ABSTRACTS OF JAPAN <br> vol. 15, no. 95 (P-1176)7 March 1991 <br> & JP-A-2 308 101 ( MITSUBISHI HEAVY IND. ) 21 <br> December 1990 <br> * abstract * <br> --- | 5 | |
| A | DE-A-3 201 289 (HITACHI) <br> * page 5, last paragraph * <br> ----- | 1-3 | **TECHNICAL FIELDS SEARCHED (Int. Cl.5)** <br><br> G02B |

The present search report has been drawn up for all claims

| Place of search | Date of completion of the search | Examiner |
|---|---|---|
| BERLIN | 10 AUGUST 1992 | VON MOERS F. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document